# FASCICULE DE BREVET EUROPEEN

(11) **EP 2 914 400 B1**
(45) Date de publication et mention de la délivrance du brevet: **10.07.2019**
(21) Numéro de dépôt: 13801625.8
(22) Date de dépôt: 29.10.2013
(51) Int. Cl.: B24B 13/005, B29D 11/00

(54) **PROCÉDÉ DE FABRICATION PAR USINAGE DE LENTILLES OPHTALMIQUES**
VERFAHREN ZUR MASCHINELLEN HERSTELLUNG VON KONTAKTLINSEN
METHOD FOR MANUFACTURING OPHTHALMIC LENSES BY MACHINING

(30) Priorité: 30.10.2012 FR 1260371
(43) Date de publication de la demande: 09.09.2015
(73) Titulaire: Essilor International, 94220 Charenton-le-Pont (FR)
(72) Inventeur: CASTRO, Luis, F-94220 Charenton-le-Pont (FR); GACOIN, Eric, F-94220 Charenton-le-Pont (FR); MOINE, Jérôme, F-94220 Charenton-le-Pont (FR); PONS, Bernard, F-94220 Charenton-le-Pont (FR)
(74) Mandataire: Santarelli
(86) Numéro de dépôt international: PCT/FR2013/052591
(87) Numéro de publication internationale: WO 2014/068248

(56) Documents cités:
- WO-A1-2004/080653
- FR-A1- 2 819 897
- GB-A- 2 084 493

## Description

L'invention concerne le domaine de la fabrication des lentilles ophtalmiques.

L'invention concerne plus particulièrement les procédés de fabrication de telles lentilles ophtalmiques présentant une première face et une deuxième face opposée à la première face.

On connaît déjà de la demande de brevet européen EP 2 199 021 de tels procédés de fabrication, comportant une étape de fourniture d'un palet, aussi appelé semi-fini, ayant une face supérieure préformée et une face inférieure à usiner.

Ici, la première face de la lentille est formée par la face supérieure du palet, et la deuxième face de la lentille est formée par la face inférieure du palet.

En outre, un procédé de fabrication qui forme la base du préambule de la revendication 1 est connu de WO2004/080653.

La fabrication d'une telle lentille comporte typiquement des étapes au cours desquelles le palet reçoit sur sa surface des marquages.

Par exemple, il peut s'agir de points ou de croix identifiant un point particulier (par exemple le centre optique de la lentille ou le point de référence de prisme pour un verre progressif), des traits d'axes (par exemple pour indiquer l'axe horizontal selon lequel l'astigmatisme est corrigé), les formes délimitant une zone particulière (par exemple, zone de vision de près ou zone de vision de loin dans le cas des lentilles ophtalmiques progressives). De même, il peut être nécessaire d'effectuer des marquages relatifs à l'identification de la lentille ou autres marquages commerciaux.

Ces marquages sont généralement réalisés par des microgravures ou par des marquages imprimés, dits marquages temporaires.

Le palet ainsi marqué est ensuite monté sur une bague dite de support.

Cette bague est annulaire et comporte sur un bord supérieur plusieurs repères visuels de contrôle.

L'opérateur peut ainsi effectuer un contrôle visuel grossier de la position du palet sur la bague en comparant les positions des marquages sur le palet et des repères visuels sur la bague. Si cela est nécessaire, l'opérateur peut modifier la position du palet sur la bague en le déplaçant manuellement en translation selon trois directions relatives à trois axes d'un repère orthonormal basique, et en rotation suivant également trois directions définies autour respectivement de chacun des trois axes.

Le palet est ensuite assujetti à cette bague ainsi qu'à un pion de blocage par l'intermédiaire d'un matériau liant, ici un métal dit fusible, s'étendant de la face supérieure du palet jusqu'à ce pion de blocage.

La bague est ainsi interposée entre le palet et le pion de blocage.

Le pion de blocage, ensemble avec la bague et le palet, est monté sur un appareil de blocage et de contrôle, lequel appareil comporte un dispositif de visualisation, autrement dit une caméra, configuré pour visualiser à la fois les repères de contrôle de la bague et les marquages sur le palet.

L'appareil détermine ainsi une première position du palet par rapport à la bague, et plus précisément de la face supérieure du palet ayant les marquages, puis détermine une erreur de positionnement en comparant cette première position à une position prédéterminée du palet par rapport à la bague.

La première position du palet correspond à la position réelle de la face supérieure du palet par rapport à la bague et l'erreur de positionnement est représentative des corrections qu'il est nécessaire d'apporter à un fichier de surface de la face inférieure. Ce fichier de surface est un fichier d'usinage de la face inférieure du palet, lequel fichier est chargé dans une machine d'usinage pour l'usinage de cette face inférieure.

L'appareil de blocage et de contrôle envoie donc cette erreur de positionnement et/ou ces corrections de coordonnées à la machine d'usinage configurée pour usiner la face inférieure du palet, sur la base du fichier de surface corrigé, pour former la deuxième face de la lentille ophtalmique.

L'invention vise à fournir un procédé de fabrication de lentilles ophtalmiques qui soit simple, commode et économique.

L'invention a ainsi pour objet un procédé de fabrication par usinage d'une lentille ophtalmique présentant une première face et une deuxième face opposée à ladite première face, ladite première face étant pourvue d'une première surface optique et ladite deuxième face étant pourvue d'une deuxième surface optique, avec lesdites première et deuxième surfaces optiques qui définissent une zone optiquement utile de ladite lentille ophtalmique, ledit procédé comportant les étapes de :
- fournir un palet ayant une face supérieure, une face inférieure opposée à ladite face supérieure et une tranche périphérique raccordant lesdites faces supérieure et inférieure ;
- fournir un premier dispositif de maintien présentant un premier référentiel d'usinage défini par trois directions de translation correspondant à trois axes d'un repère orthonormal basique et par trois directions de rotation définies respectivement autour des trois dites directions de translation, avec deux des trois dites directions de translation qui se trouvent dans un même premier plan et l'autre des trois dites directions de translation qui se trouve dans un deuxième plan ;
ledit procédé étant caractérisé en ce qu'il comporte les étapes de :
- monter ledit palet sur ledit premier dispositif de maintien dans une première position où ladite face inférieure dudit palet est en regard dudit premier dispositif de maintien, lequel est configuré pour maintenir ledit palet par sa face inférieure ou par sa tranche périphérique ;
- usiner, dans ladite première position dans ledit premier référentiel d'usinage, ladite face supérieure pour obtenir ladite première surface optique et ainsi former un palet semi-fini ;
- usiner dans un deuxième référentiel d'usinage défini de la même manière que ledit premier référentiel d'usinage, au moins un élément de référencement mécanique sur au moins l'une quelconque desdites faces supérieure et inférieure et de ladite tranche périphérique, avec ledit deuxième référentiel d'usinage qui est prédéterminé et connu par rapport audit premier référentiel d'usinage, et avec ladite étape d'usiner qui est configurée pour que ledit au moins un élément de référencement mécanique soit situé en dehors de ladite zone optiquement utile, pour former ainsi un palet semi-fini repéré ; et
- fournir un deuxième dispositif de maintien comportant au moins un élément complémentaire de référencement mécanique, lequel est configuré pour coopérer avec ledit au moins un élément de référencement mécanique dudit palet semi-fini repéré pour que ce dernier soit positionné et maintenu sur ledit deuxième dispositif de maintien dans une deuxième position qui est prédéterminée au moins suivant les trois dites directions de translation et suivant les deux dites directions de rotation définies respectivement autour des deux dites directions de translation qui se trouvent dans ledit premier plan ;
   avec ledit au moins un élément de référencement mécanique qui est formé par usinage d'au moins une zone chanfreinée ménagée au moins sur ladite tranche périphérique et sur l'une quelconque desdites faces supérieure et inférieure, hors de ladite zone optiquement utile ; et avec ledit au moins un élément complémentaire de référencement mécanique qui est formé par au moins un épaulement ménagé sur ledit deuxième dispositif de maintien et configuré pour recevoir en appui ladite au moins une zone chanfreinée.

Le procédé de fabrication selon l'invention offre l'avantage de préparer de manière précise, simple, commode et économique le positionnement de la deuxième face de la lentille par rapport à la première face de la lentille en vue de l'usinage de cette deuxième face tout en limitant, voire en éliminant, d'éventuelles erreurs de positionnement.

En réalité, il s'agit du positionnement de la face inférieure du palet par rapport à la première face de la lentille pour la fabrication par usinage de la deuxième face de la lentille.

L'usinage de la face supérieure pour former la première surface optique dans la première position dans le premier référentiel d'usinage permet de créer une référence.

L'usinage dudit au moins un élément de référencement mécanique dans le deuxième référentiel d'usinage (connu par rapport au premier) permet de positionner exactement ce ou ces éléments sur le palet semi-fini (hors de la zone optiquement utile). Il peut s'agir du palet brut si l'usinage du ou des éléments est réalisé avant l'usinage de la face supérieure pour former la première surface optique.

La zone optiquement utile est la zone de la lentille ophtalmique qui comporte les caractéristiques optiques liées à la prescription du porteur. Il s'agit généralement d'une zone de la lentille qui se trouve dans une monture de lunettes lorsque cette lentille est taillée à la forme de la monture et est montée dans cette dernière.

La première position dans laquelle est monté et maintenu le palet sur le premier dispositif de maintien est une position dans laquelle il est possible de procéder à l'usinage de la face supérieure du palet pour former un palet semi-fini ainsi qu'à l'usinage dudit au moins un élément de référencement mécanique. Autrement dit, la première position est une position quelconque dans le sens où elle n'est pas déterminée ni prédéterminée mais où les étapes d'usinage susmentionnées sont possibles.

Ces deux étapes d'usinage permettent donc d'obtenir un palet semi-fini repéré sur lequel un ou plusieurs éléments de référencement mécanique et une première surface optique sont positionnés de manière déterminée l'un (ou les uns) par rapport à l'autre.

Ces deux étapes d'usinage sont généralement mises en oeuvre à l'aide du même premier dispositif de maintien où le palet est conservé en position (autrement dit, le palet n'est pas démonté du premier dispositif de maintien entre les deux étapes d'usinage), mais en fonction du ou des éléments de référencement mécanique réalisé(s) par usinage, le palet peut être démonté du premier dispositif de maintien entre ces deux étapes d'usinage. Le remontage est possible de manière précise car le deuxième référentiel d'usinage est prédéterminé et connu par rapport au premier référentiel d'usinage. Dans un cas ou dans l'autre, le palet semi-fini repéré est démonté du premier dispositif de maintien pour le libérer, avant l'usinage de la face inférieure pour obtenir la deuxième surface optique.

Grâce aux deux étapes d'usinage décrites ci-dessus et à la fourniture du deuxième dispositif de maintien, le palet semi-fini repéré est donc prêt pour être positionné dans une deuxième position prédéterminée pour l'usinage futur de sa face inférieure afin de former la deuxième surface optique de la lentille.

Dans cette deuxième position prédéterminée, le positionnement de la face inférieure du palet par rapport à la première face de la lentille (c'est-à-dire la face supérieure du palet qui a été usinée pour former la première surface optique sur cette première face) est assuré selon les trois directions de translation correspondant aux trois axes d'un repère orthonormal basique, à savoir les directions Tx et Ty qui se trouvent ici dans le même premier plan et la direction Tz qui se trouve dans le deuxième plan, ainsi que selon les deux directions au moins de rotation définies respectivement autour des directions de translation Tx et Ty ci-dessus, à savoir Rx et Ry.

On notera que l'on entend par zone chanfreinée une zone ayant au moins une portion en rampe par exemple de forme biseautée ou conique, ou encore en forme de congé ou en forme d'épaulement, et on appelle ici chanfrein ou moulure une telle zone ayant l'une quelconque de ces formes.

Selon des caractéristiques préférées, simples, commodes et économiques du procédé selon l'invention :
ledit premier référentiel et ledit deuxième référentiel d'usinage sont confondus ; ce qui signifie que les étapes d'usiner la face supérieure du palet pour obtenir la première surface optique et au moins un élément de référencement mécanique sont réalisées dans une même machine d'usinage ;
- lesdites étapes d'usiner ladite face supérieure et ledit au moins un élément de référencement mécanique sont successives ou confondues ; ce qui signifie que les étapes d'usiner la face supérieure du palet pour obtenir la première surface optique et au moins un élément de référencement mécanique sont réalisées soit en même temps (dans une même machine) soit successivement dans un ordre ou dans l'autre (la face supérieure avant ou après l'élément de référencement mécanique) (dans une même machine d'usinage ou dans deux machines d'usinage distinctes) ;
- lesdites étapes d'usiner ledit premier référentiel d'usinage et ledit deuxième référentiel d'usinage sont distincts, avec ledit deuxième référentiel d'usinage qui présente un décalage connu par rapport audit premier référentiel d'usinage ; ce qui signifie que les étapes d'usiner la face supérieure du palet pour obtenir la première surface optique et au moins un élément de référencement mécanique sont réalisées dans deux machines d'usinage distinctes ;
- au moins un autre dit élément de référencement mécanique est formé par usinage d'au moins une zone rainurée ménagée sur ladite tranche périphérique ou sur l'une quelconque desdites faces supérieure et inférieure, hors de ladite zone optiquement utile ; et au moins un autre dit élément complémentaire de référencement mécanique est formé par au moins une protubérance ménagée sur ledit deuxième dispositif de maintien et configurée pour être reçue en appui dans ladite au moins une zone rainurée ;
- ladite au moins une zone chanfreinée ou rainurée est au moins partiellement continue et de dimensions constantes, respectivement de largeur ou de profondeur, et ledit au moins un élément de référencement mécanique est en outre formé par usinage d'une zone de blocage sur ladite tranche périphérique, laquelle zone de blocage est configurée pour positionner ledit palet semi-fini repéré suivant ladite direction de rotation définie autour de ladite direction de translation qui se trouve dans ledit deuxième plan ; ce qui signifie que la zone de blocage permet en outre de préparer le positionnement du palet semi-fini repéré selon l'autre direction de rotation définie autour de la direction de translation Tz, à savoir Rz ;
- ladite au moins une zone chanfreinée ou rainurée est au moins partiellement continue et de dimensions variables, respectivement de largeur ou de profondeur ; ce qui signifie qu'il peut y avoir plusieurs zones chanfreinées ou rainurées et/ou que cette ou ces zones peuvent être à des altitudes distinctes ;
- au moins un autre dit élément de référencement mécanique est formé par usinage d'une pluralité d'échancrures individuelles ménagées sur ladite tranche périphérique et/ou ou sur l'une quelconque desdites faces supérieure et inférieure, hors de ladite zone optiquement utile ; et au moins un autre dit élément complémentaire de référencement mécanique est formé par une pluralité de protubérances ménagées sur ledit deuxième dispositif de maintien et configurées pour recevoir en appui ladite pluralité d'échancrures individuelles ; et/ou
- le procédé comporte en outre les étapes de monter ledit palet semi-fini repéré sur ledit deuxième dispositif de maintien dans ladite deuxième position prédéterminée, lequel est configuré pour maintenir ledit palet semi-fini repéré par sa face supérieure ou par sa tranche périphérique ; et
- usiner ladite face inférieure dudit palet semi-fini repéré pour obtenir ladite deuxième surface optique et ainsi former ladite lentille ophtalmique.

Selon d'autres caractéristiques préférées, simples, commodes et économiques du procédé selon l'invention :
- ladite au moins une zone chanfreinée dudit palet présente un angle d'inclinaison par rapport à ladite tranche dudit palet, lequel angle d'inclinaison est déterminé de sorte à augmenter le contact entre ledit palet et ledit deuxième dispositif de maintien en fonction d'au moins une contrainte prédéterminée ;
- ledit angle d'inclinaison de ladite au moins une zone chanfreinée est déterminé en fonction d'une caractéristique représentative d'un périmètre de contact entre ladite au moins une zone chanfreinée dudit palet et ledit épaulement dudit deuxième dispositif de maintien pour assurer la stabilité dudit palet dans ledit deuxième dispositif de maintien ; et/ou
- ledit angle d'inclinaison de ladite au moins une zone chanfreinée est déterminé en fonction d'une caractéristique représentative d'une zone optiquement utile de ladite lentille ophtalmique pour assurer une ouverture prédéterminée de ladite lentille ophtalmique.

L'ouverture de la lentille ophtalmique est représentative de la taille de la zone optiquement utile.

On va maintenant poursuivre l'exposé de l'invention par la description d'un exemple de réalisation, donnée ci-après à titre illustratif et non limitatif, en référence aux dessins annexés sur lesquels :
- la figure 1 est un schéma-blocs illustrant différentes étapes de fonctionnement du procédé de fabrication de la lentille ophtalmique ;
- la figure 2 représente schématiquement, en vue de dessus, un palet brut fourni dans une étape du procédé de la figure 1 ;
- la figure 3 représente schématiquement, en vue de dessus, une lentille ophtalmique obtenue lors de la mise en oeuvre du procédé de la figure 1 ;
- la figure 4 représente schématiquement encore une autre étape du procédé de fabrication de la figure 1, ici le montage et le maintien du palet brut sur un premier dispositif de maintien ;
- la figure 5 représente schématiquement encore une autre étape du procédé de fabrication de la figure 1, ici l'usinage, dans une première machine d'usinage, d'une face supérieure du palet pour obtenir une première surface optique et ainsi former un palet semi-fini ;
- la figure 6 représente schématiquement encore une autre étape du procédé de fabrication de la figure 1, ici l'usinage, dans la première machine d'usinage, d'un élément de référencement mécanique sur la face supérieure du palet semi-fini pour former un palet semi-fini repéré ;
- la figure 7 représente schématiquement encore une autre étape du procédé de fabrication de la figure 1, ici l'usinage, dans une seconde machine d'usinage, d'un élément de référencement mécanique sur la face supérieure du palet semi-fini pour former un palet semi-fini repéré ;
- la figure 8 représente schématiquement encore une autre étape du procédé de fabrication de la figure 1, ici le montage et le maintien du palet semi-fini repéré sur un deuxième dispositif de maintien ;
- les figure 9 à 11 illustrent, en vue de dessus, des variantes de réalisation du palet semi-fini repéré visible sur les figures 6 à 8 ;
- la figure 12 est une vue de face d'une variante du deuxième dispositif de maintien visible sur la figure 8, pris isolément ;
- les figures 13 à 16 montrent chacune le palet des figures 2 et 3, en vues de face et de dessus, selon plusieurs variantes de réalisation d'une zone chanfreinée qu'il comporte.

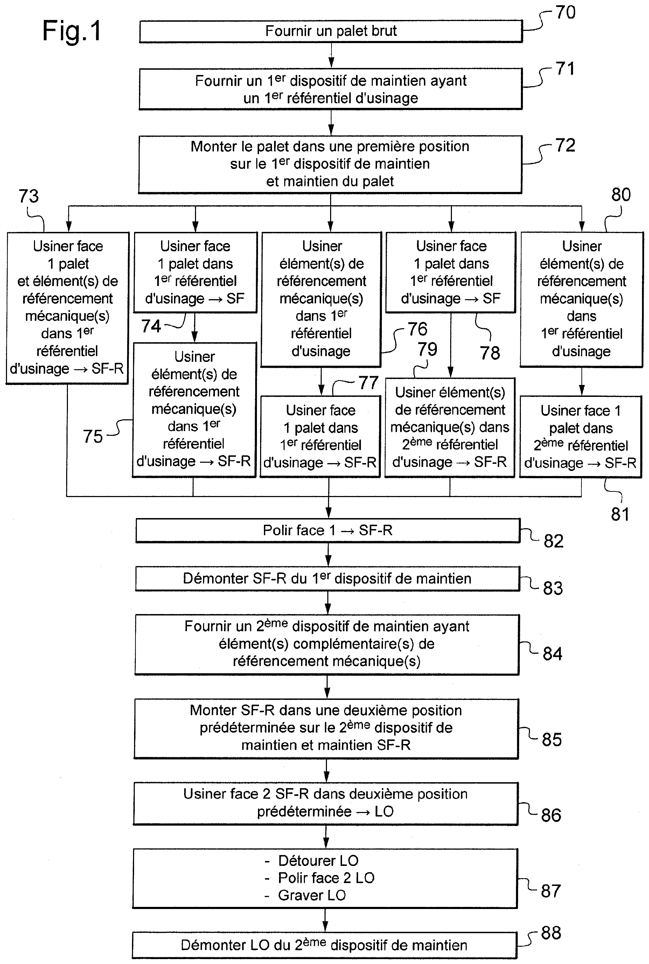

La figure 1 illustre différentes étapes de fonctionnement d'un procédé de fabrication par usinage d'une lentille ophtalmique, référencée LO sur le schéma-blocs, à partir d'un palet brut.

L'usinage peut ici être réalisé par tournage et/ou par fraisage et/ou par meulage.

Il s'agit ici de certaines étapes seulement du procédé de fabrication car des étapes supplémentaires peuvent être envisagées, par exemple des étapes de filmage du palet, ou encore des étapes de stockage (voir ci-après)

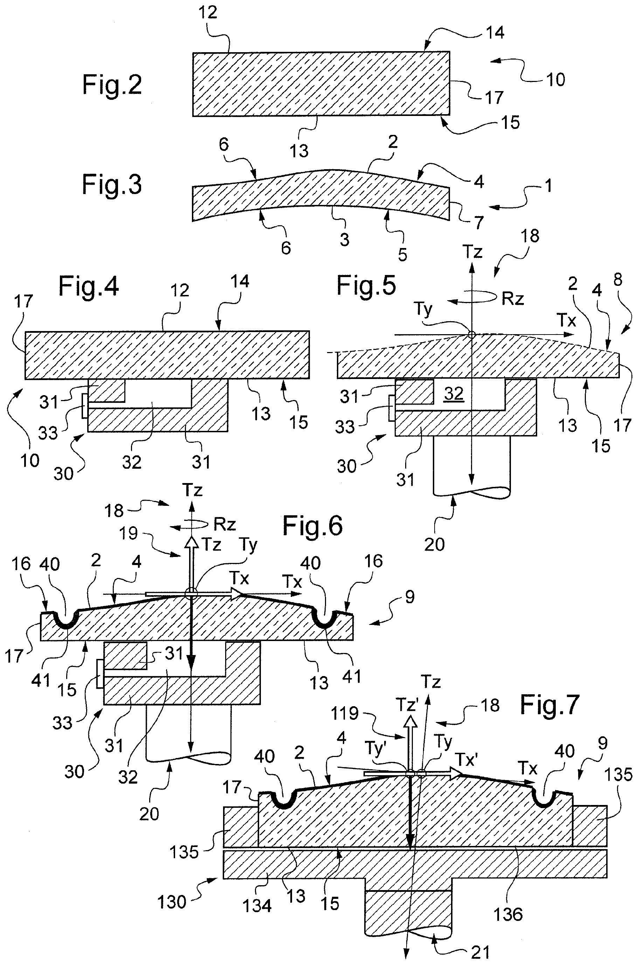

On va décrire en référence aux figures 2 et 3 le palet brut 10 et la lentille ophtalmique 1.

La lentille ophtalmique est ici formée à partir d'un palet brut 10 comportant un corps plein généralement moulé en matière plastique.

Ce palet 10 est ici à l'état brut et présente une face supérieure 12 ayant une surface supérieure 14, une face inférieure 13 opposée à la face supérieure 12 et ayant une surface inférieure 15, ainsi qu'un contour périphérique appelé tranche périphérique 17, laquelle tranche raccorde les faces supérieure 12 et inférieure 13.

Les faces supérieure 12 et inférieure 13 du palet brut 10 sont ici sensiblement droites et parallèles entre elles.

La face supérieure 12 du palet brut 10 est prévue pour former la face avant 2 de la lentille 1 et la face inférieure 10 du palet brut 10 est prévue pour former la face arrière 3.

Ici, la lentille ophtalmique 1 est du type ophtalmique et est configurée pour former un verre de lunettes, lequel est prévu pour être monté sur une monture de lunettes.

Cette lentille ophtalmique présente une première face dite face avant 2 qui a une forme complexe, ici sensiblement convexe, ainsi qu'une deuxième face dite face arrière 3 qui a une forme complexe, ici sensiblement concave, ainsi qu'une tranche périphérique 7 qui raccorde les faces avant 2 et arrière 3.

La face avant 2 présente une première surface optique dite surface optique avant 4 et la face arrière 3 présente une deuxième surface optique dite surface optique arrière 5.

Les surfaces optiques avant et arrière 4 et 5 définissent une zone de la lentille 1 dite zone optiquement utile 6, laquelle comporte les caractéristiques optiques qui sont ici complexes. Cette zone optiquement utile 6 présente ici un diamètre supérieur ou égal à environ 40 mm.

Cette zone optiquement utile 6 est ici centrée sur un point de référence prisme de la surface correspondant par exemple au centre de rotation de la lentille 1 par rapport au repère d'usinage d'une machine d'usinage.

Cette zone optiquement utile 6 est une zone de la lentille 1 qui se trouve dans la monture de lunettes lorsque cette lentille 1 est détourée (usinage de la tranche) et taillée (meulage) à la forme de cette monture et y est montée.

Les surfaces optiques avant et arrière 4 et 5 sont ici complexes, appelées "free form surfacing" ou "digital surfacing" en anglais, nécessitant un usinage et plus précisément un surfaçage, particulièrement précis et difficile notamment du fait des grandes variations d'altitude, combinées par exemple avec un tore et une progression, sur ces surfaces.

Il est nécessaire de positionner correctement la lentille ophtalmique 1, et plus précisément sa face arrière 3 (pas encore usinée) par rapport à sa face avant 2 (déjà usinée) de manière à réaliser la face arrière 3 de la lentille ophtalmique 1 conformément à la prescription ophtalmique souhaitée.

On observera (voir ci-après) que la lentille ophtalmique 1 n'est pas formée directement à partir du palet brut 10 mais à la suite de plusieurs transformations du palet 10, d'abord en un palet semi-fini puis en un palet semi-fini repéré, ou d'abord en un palet repéré puis en un palet semi-fini repéré, ou directement en un palet semi-fini repéré ; de sorte à former plusieurs produits intermédiaires avant d'obtenir la lentille ophtalmique 1.

Ce sont ces produits intermédiaires, à savoir le palet repéré, ou le palet semi-fini, ou encore la palet semi-fini repéré, qui peuvent subir des étapes supplémentaires dans le procédé de fabrication, comme par exemple une étape de stockage, voire de stockage et de transport vers un autre site, dit de production ou laboratoire. Par exemple, le semi-fini repéré est généralement stocké puis envoyé sur un autre site pour la réalisation notamment de la face arrière 3 de la lentille 1.

On va maintenant décrire plus en détail le procédé de fabrication de la lentille ophtalmique 1, en référence à la figure 1 et aussi aux figures 4 à 8.

Le procédé comporte l'étape 70 de fournir un palet brut 10 correspondant au palet brut tel que décrit ci-dessus.

Le procédé comporte l'étape 71 de fournir un premier dispositif de maintien ici formé par une pince à vide 30 (visible figure 4) configurée pour être montée dans une première machine d'usinage 20.

Cette pince à vide 30 comporte une base 31 globalement circulaire qui définit un espace interne 32 formant une chambre de pression, ainsi qu'un conduit de cheminement de fluide 33 permettant de mettre sous vide la chambre de pression lorsque le palet brut 10 est monté sur cette pince à vide 30.

Cette pince à vide présente un premier référentiel d'usinage 18 (visible figure 5) défini par trois directions de translation Tx, Ty et Tz correspondant à trois axes d'un repère orthonormal basique et par trois directions de rotation Rx, Ry, Rz définies respectivement autour des trois dites directions de translation, avec deux des trois directions de translation Tx, Ty qui se trouvent dans un même premier plan dit horizontal et l'autre des trois directions de translation Tz qui se trouve dans un deuxième plan dit vertical.

Le procédé comporte l'étape 72 de monter et maintenir le palet brut 10 sur la pince à vide 30 (figure 4).

Le palet brut 10 est monté dans une première position sur la pince à vide 30 avec sa face inférieure 13 au moins partiellement en regard de la base 31 et de l'espace interne 32 de cette pince à vide 30, pour y former la chambre de pression.

Le vide est ensuite fait dans cette chambre de pression grâce au conduit de cheminement de fluide 33 afin de maintenir (voire bloquer) dans la première position le palet brut 10, par sa face inférieure 13.

Le procédé de fabrication se décline alors en cinq choix possibles pour obtenir un palet semi-fini repéré, référencé SF-R sur le schéma-blocs.

Un des choix est représentatif d'un procédé en une seule étape alors que les autres choix sont représentatifs d'un procédé en deux étapes pour obtenir le palet semi-fini repéré SF-R.

Dans un premier choix, le procédé comporte l'étape 74 d'usiner, dans la première position du palet brut 10 sur la pince à vide 30 et dans le premier référentiel d'usinage 18, la face supérieure 12 de ce palet brut 10 pour obtenir la surface optique avant 4 et ainsi former un palet semi-fini 8, référencé SF sur le schéma-blocs.

Pour cela, la pince à vide 30 est installée dans la première machine d'usinage 20 (figure 5) et la surface supérieure 12 du palet brut 10 est usinée, par exemple par tournage, de sorte à obtenir cette surface optique avant 4.

Le procédé se poursuit avec l'étape 75 d'usiner, dans un deuxième référentiel d'usinage 19 défini de la même manière que le premier référentiel d'usinage 18, un élément de référencement mécanique formé ici par exemple par une rainure 40, sur la face supérieure 12 du palet semi-fini 8, hors de la zone optiquement utile 6 (connue mais visible en totalité seulement sur la lentille finie 1), et plus précisément sur une zone optiquement non utile 16.

Ce deuxième référentiel d'usinage 19 est ici confondu avec le premier référentiel d'usinage 18 car la pince à vide 30 est laissée sur la même machine d'usinage 20.

Les étapes 74 et 75 sont ici successives.

Ce deuxième référentiel d'usinage 19 est donc défini à l'identique, par les trois mêmes directions de translation Tx, Ty et Tz correspondant aux trois axes du repère orthonormal basique et par les trois mêmes directions de rotation Rx, Ry, Rz définies respectivement autour des trois dites directions de translation, avec deux des trois directions de translation Tx, Ty qui se trouvent dans le même premier plan et l'autre des trois directions de translation Tz qui se trouve dans le même deuxième plan.

Cette étape 75 permet d'obtenir un palet semi-fini repéré 9.

La rainure 40 forme ici une gorge globalement circulaire et continue, de contour fermé, qui présente un fond 41 ménagé à une profondeur variable le long de cette rainure 40. Cette rainure 40 présente donc des variations de profondeur.

Ce procédé permet de connaître exactement la position de cette rainure 40 sur le palet semi-fini repéré 9, et même relativement à la surface avant optique 4.

Dans un deuxième choix, le procédé comporte d'abord l'étape 76 d'usiner, dans la première machine d'usinage 20, la rainure 40 sur la pince à vide 30 pour obtenir un palet repéré (non représenté) puis l'étape 77 d'usiner la surface supérieure 12 du palet repéré dans cette même machine d'usinage 20, pour obtenir le palet semi-fini repéré 9.

Le premier référentiel d'usinage 18 et le deuxième référentiel d'usinage 19 sont donc également confondus.

Les étapes 76 et 77 se déroulent donc de manière similaire aux étapes 75 et 76, la succession des étapes étant inversée.

Dans un troisième choix, le procédé comporte l'étape 73 d'usiner, dans la première machine d'usinage 20 et durant la même opération d'usinage, la face supérieure 12 et la rainure 40 pour obtenir en une seule étape le palet semi-fini repéré 9.

Ici, les étapes d'usiner la face supérieure 12 et la rainure 40 sont confondues et le premier référentiel d'usinage et le deuxième référentiel d'usinage sont également confondus.

Pour cela, la première machine d'usinage 20 est configurée pour recevoir un fichier d'usinage caractéristique de la géométrie du palet semi-fini repéré (surface avant optique 4 ménagée dans la zone optiquement utile 6 et élément de référencement mécanique ménagé dans la zone optiquement non utile 16) ; contrairement aux premier et deuxième choix décrits ci-dessus pour lesquels la première machine d'usinage 20 est configurée pour recevoir un premier fichier d'usinage (basé sur une première référence) caractéristique de la géométrie du palet semi-fini (surface avant optique 4 ménagée dans la zone optiquement utile 6) et un deuxième fichier d'usinage (basé sur une deuxième référence identique à la première) caractéristique de la géométrie du palet semi-fini repéré (élément de référencement mécanique ménagé dans la zone optiquement non utile 16).

Dans un quatrième choix, le procédé comporte l'étape 78 d'usiner, dans la première position du palet brut 10 sur un autre premier dispositif de maintien formé ici par une pince de serrage 130 et dans le premier référentiel d'usinage 18, la face supérieure 12 de ce palet brut 10 pour obtenir la première surface optique 4 et ainsi former un palet semi-fini 8, référencé SF sur le schéma-blocs (étape identique à l'étape 74, à l'exception qu'il s'agit ici d'une pince de serrage 130 plutôt que de la pince à vide 30).

Cette pince de serrage 130 comporte une base 134 globalement circulaire ainsi qu'une bague de serrage 135 qui définit un espace interne 136 (figure 7).

Cette pince de serrage 130 présente un premier référentiel d'usinage 18 similaire à celui de la pince à vide 30, défini par trois directions de translation Tx, Ty et Tz correspondant à trois axes d'un repère orthonormal basique et par trois directions de rotation Rx, Ry, Rz définies respectivement autour des trois dites directions de translation, avec deux des trois directions de translation Tx, Ty qui se trouvent dans un même premier plan et l'autre des trois directions de translation Tz qui se trouve dans un deuxième plan.

Préalablement, pour le maintien du palet brut 10 dans cette pince de serrage 130, le palet brut 10 est monté au moins partiellement dans l'espace interne 136, dans une première position, avec sa face inférieure 13 au moins partiellement en regard de la base 134.

La bague de serrage 135 est ensuite serrée contre le palet brut 10 en venant s'appliquer sur la tranche périphérique 17 de ce dernier, afin de maintenir (voire bloquer) dans la première position le palet brut 10, par sa tranche.

Pour l'étape d'usinage 78, la pince de serrage 130 est installée dans la première machine d'usinage 20 et la surface supérieure 12 du palet brut 10 est usinée, par exemple par tournage, de sorte à obtenir la première surface optique 4, pour former le palet semi-fini 8.

Le procédé se poursuit avec l'étape 79 d'usiner, dans un deuxième référentiel d'usinage 19 défini de la même manière que le premier référentiel d'usinage 18, un élément de référencement mécanique formé par exemple par la rainure 40, sur la face supérieure 12 du palet semi-fini 8, dans la zone optiquement non utile (figure 7).

Pour cela, la pince de serrage 130 est désinstallée de la première machine d'usinage 20 et est installée sur une deuxième machine d'usinage 21, le palet semi-fini 8 étant conservé en position sur cette pince de serrage 130 (un système permet de garder serrée la pince durant le changement de machine).

Dans ce cas, le premier référentiel d'usinage 18 et le deuxième référentiel d'usinage 19 sont distincts et le deuxième référentiel d'usinage 19 présente un décalage connu par rapport au premier référentiel d'usinage 18.

Ce deuxième référentiel d'usinage 19 (représenté sur la figure 7) est prédéterminé et défini de manière similaire, avec un décalage connu, par trois directions de translation Tx', Ty' et Tz' correspondant aux trois axes d'un repère orthonormal basique et par trois directions de rotation définies respectivement autour des trois directions de translation, avec deux des trois directions de translation Tx', Ty' qui se trouvent dans un même premier plan dit horizontal et l'autre des trois dites directions de translation Tz' qui se trouve dans un deuxième plan dit vertical.

La première machine d'usinage 20 est configurée pour recevoir un premier fichier d'usinage (basé sur une première référence) caractéristique de la géométrie du palet semi-fini (surface avant optique 4 ménagée dans la zone optiquement utile) et la deuxième machine d'usinage 21 est configurée pour recevoir un deuxième fichier d'usinage (basé sur une deuxième référence prédéterminée et dont le décalage est connu par rapport à la première) caractéristique de la géométrie du palet semi-fini repéré (élément de référencement mécanique ménagé dans la zone optiquement non utile).

Dans un cinquième choix, le procédé comporte d'abord l'étape 80 d'usiner, dans la première machine d'usinage 20, la rainure 40 sur la pince de serrage 130 pour obtenir un palet repéré (non représenté) puis l'étape 81 d'usiner la surface supérieure 12 du palet repéré dans la deuxième machine d'usinage 21, pour obtenir le palet semi-fini repéré 9.

Le premier référentiel d'usinage 18 et le deuxième référentiel d'usinage 19 sont également distincts.

Les étapes 80 et 81 se déroulent donc de manière similaire aux étapes 78 et 79, la succession des étapes étant inversée.

La première position dans laquelle est monté et maintenu le palet brut 10 sur la pince à vide 30 ou sur la pince de serrage 130 (étape 72) est une position dans laquelle il est possible de procéder à l'usinage (étapes 73, 74, 77, 78, 81) de la face supérieure 12 de ce palet brut 10 ainsi qu'à l'usinage (étapes 73, 75, 76, 79, 80) de la rainure 40 pour former le palet semi repéré SF-R. Autrement dit, la première position est une position quelconque dans le sens où elle n'est pas déterminée ni prédéterminée mais où les étapes d'usinage susmentionnées sont possibles.

Le procédé comporte l'étape 82 de polir le palet semi-fini repéré 9. Cette étape peut être mise en oeuvre dans une machine spécifique (non représentée) ou dans la première ou deuxième machine d'usinage 20, 21.

Le procédé comporte l'étape 83 de démonter le palet semi-fini repéré du premier dispositif de maintien, à savoir la pince à vide 30 ou la pince de serrage 130.

Pour cela, il suffit de mettre à l'atmosphère la chambre de pression de la pince à vide 30 grâce au conduit de cheminement de fluide 33 ou de desserrer la bague de serrage 135 de la pince de serrage 130.

Le procédé comporte l'étape de fournir 84 un deuxième dispositif de maintien 50 formé ici par une pince d'usinage 50 pourvue d'un élément complémentaire de référencement mécanique configuré pour coopérer avec l'élément de référencement mécanique du palet semi-fini repéré 9.

Cette pince d'usinage 50 comporte une base 51 globalement circulaire et une paroi latérale cylindrique 52 qui définissent un espace interne 55 formant une chambre de pression, ainsi qu'un conduit de cheminement de fluide 54 permettant de mettre sous vide la chambre de pression lorsque le palet semi-fini repéré 9 est monté sur cette pince d'usinage 50.

Cette pince d'usinage 50 comporte en outre, à une extrémité libre de la paroi latérale cylindrique 52 qui est opposée à la base 51, une protubérance 53, aussi appelée doigt, formant l'élément complémentaire de référencement mécanique.

Cette protubérance 53 est configurée pour coopérer et plus précisément pour être reçue en appui dans le fond 41 de la rainure 40, pour que ce palet semi-fini repéré 9 soit positionné et maintenu sur la pince d'usinage 50 dans une deuxième position qui est prédéterminée ici suivant les trois directions de translation Tx, Ty et Tz et suivant les trois directions de rotation Rx, Ry et Rz définies respectivement autour de ces directions de translation (voir ci-après).

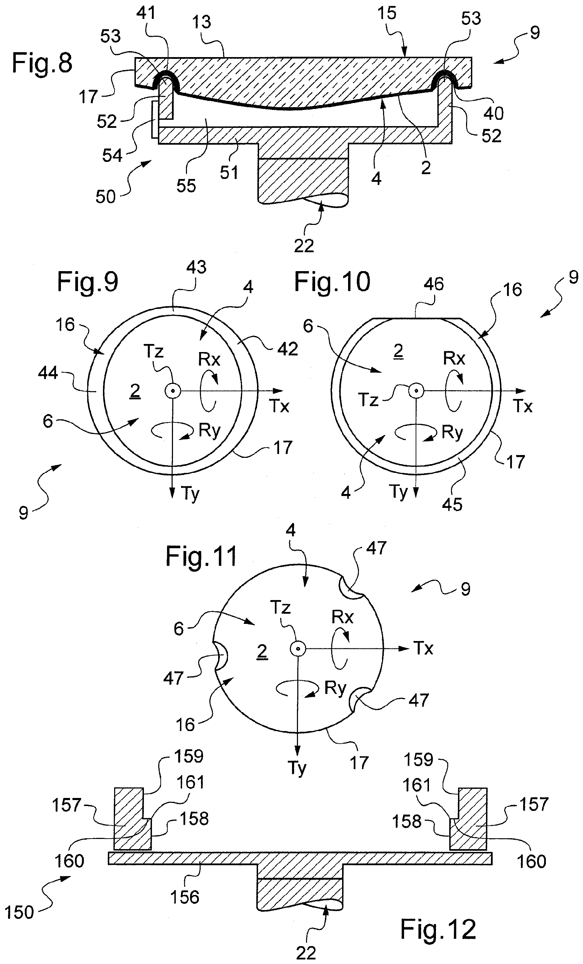

Le procédé comporte l'étape 85 de monter et maintenir le palet semi-fini repéré 9 sur la pince d'usinage 50 (figure 9).

Le palet semi-fini 9 est monté dans une deuxième position prédéterminée sur la pince d'usinage 50 avec le fond 41 de la rainure 40 en appui sur la protubérance 53 de cette pince d'usinage 50.

Ainsi disposé, le palet semi-fini repéré 9 a sa face supérieure 12 au moins partiellement en regard de la base 51 et de l'espace interne 55 de cette pince d'usinage 50, pour pouvoir ensuite usiner la face inférieure 13.

Le palet semi-fini 9 est donc monté sur la pince d'usinage 50 de telle manière qu'il est positionné et maintenu, par sa face supérieure 12 transformée en face avant 2, dans la deuxième position prédéterminée suivant les trois directions de translation Tx, Ty et Tz et suivant les trois directions de rotation Rx, Ry et Rz définies respectivement autour de ces directions de translation, grâce à la rainure 40 et à la protubérance 53.

Dans cette deuxième position prédéterminée, le positionnement de la face inférieure 13 par rapport à la surface avant optique 4 est assuré selon les trois directions de translation Tx, Ty et Tz et selon les trois directions de rotation Rx, Ry et Rz.

Le procédé comporte l'étape 86 d'usiner, sur la pince d'usinage 50, la face inférieure 13 du palet semi-fini repéré 9 pour obtenir la surface optique arrière 5 et ainsi former la lentille ophtalmique 1, référencée LO sur le schéma-blocs.

Pour cela, la pince de serrage 50 est installée dans une troisième machine d'usinage 22 (figure 8) et la surface inférieure 15 du palet semi-fini repéré 9 est usinée, par exemple par tournage, de sorte à obtenir la surface optique arrière 5.

Le procédé comporte l'étape 87 de détourer (et tailler) la lentille ophtalmique 1 en usinant (et meulant) la tranche périphérique 17 pour ainsi former la tranche 7 de la lentille 1, puis de polir la surface optique arrière 5 et enfin de graver la face arrière 3 de la lentille.

Ces gravures peuvent par exemple être des marquages relatifs à l'identification de la lentille ou autres marquages commerciaux.

Ces marquages sont généralement réalisés par des microgravures ou par des marquages imprimés, dits marquages temporaires.

Le procédé comporte l'étape 88 de démonter la lentille ophtalmique 1 du deuxième dispositif de maintien, à savoir de la pince d'usinage 50, et pour cela, il suffit de mettre à l'atmosphère la chambre de pression de la pince d'usinage 50 grâce au conduit de cheminement de fluide 54.

La figure 9 illustre une variante de réalisation d'un élément de référencement mécanique du palet semi-fini repéré.

Le palet semi-fini repéré 9 de la figure 9 présente un élément de référencement mécanique formé ici par l'usinage, hors de la zone optiquement utile 6, d'une zone chanfreinée 42 ménagée partiellement sur la tranche périphérique 17 et sur la face supérieure 12, laquelle a été transformée partiellement en face avant 2 et en surface optique avant 4.

La zone chanfreinée 42 est continue et de dimensions variables, en largeur. Ici, la zone chanfreinée 42 présente deux portions étroites 43 qui sont opposées et deux portions larges 44 qui sont opposées, la répartition des portions 43 et 44 sur le contour du palet semi-fini 9 étant alternée.

Cette zone chanfreinée variable 42 et la tranche périphérique 17 forment ensemble des éléments de référencement mécanique configurés pour positionner le palet semi-fini repéré 9 dans la deuxième position prédéterminée suivant les trois directions de translation Tx, Ty et Tz et suivant les trois directions de rotation Rx, Ry et Rz définies respectivement autour de ces directions de translation.

La figure 10 illustre une autre variante de réalisation d'un élément de référencement mécanique du palet semi-fini repéré.

Le palet semi-fini repéré 9 de la figure 10 présente un élément de référencement mécanique formé ici par l'usinage, hors de la zone optiquement utile 6, d'une zone chanfreinée 45 ménagée partiellement sur la tranche périphérique 17 et sur la face supérieure 12, laquelle a été transformée partiellement en face avant 2 et en surface optique avant 4.

Ici, la zone chanfreinée 45 est continue (sans être de contour fermé) et de largeur constante.

Le palet semi-fini repéré 9 de la figure 10 présente en outre une zone de blocage formée par usinage d'un méplat 46 sur la tranche périphérique 17.

Cette zone chanfreinée constante 45, le méplat 46 et la tranche périphérique 17 forment ensemble des éléments de référencement mécanique configurés pour positionner le palet semi-fini repéré 9 dans la deuxième position prédéterminée suivant les trois directions de translation Tx, Ty et Tz et suivant les trois directions de rotation Rx, Ry et Rz définies respectivement autour de ces directions de translation.

Les zones chanfreinées illustrées sur les figures 4 et 5 présente chacune une pente, ou angle d'inclinaison par rapport à la tranche 17 du palet semi-fini repéré 9, comprise entre environ 20° et environ 45°.

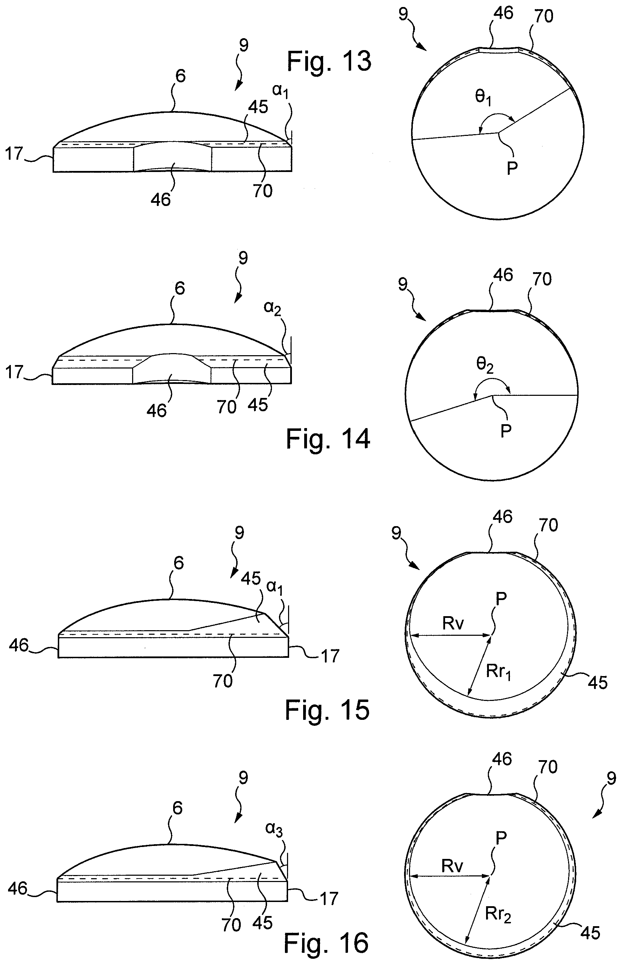

Cet angle d'inclinaison est déterminé de sorte à augmenter le contact entre le palet 9 et le deuxième dispositif de maintien 50 en fonction d'au moins une contrainte prédéterminée (voir ci-après en référence aux figures 13 à 16).

La figure 11 illustre encore une autre variante de réalisation d'un élément de référencement mécanique du palet semi-fini repéré.

Le palet semi-fini repéré 9 de la figure 11 présente plusieurs éléments de référencement mécanique formé ici par l'usinage, hors de la zone optiquement utile 6, de trois échancrures individuelles 47, ici en demi-lune, ménagées de manière régulièrement répartie sur la tranche périphérique 17 et sur la face supérieure 12, laquelle a été transformée partiellement en face avant 2 et en surface optique avant 4.

Ces trois échancrures forment des éléments de référencement mécanique configurés pour positionner le palet semi-fini repéré 9 dans la deuxième position prédéterminée suivant les trois directions de translation Tx, Ty et Tz et suivant les trois directions de rotation Rx, Ry et Rz définies respectivement autour de ces directions de translation.

Dans une variante illustrée à la figure 12, la pince d'usinage 50 de la figure 8 est remplacée par une bague de blocage 150.

Cette bague de blocage 150 comporte une base 156 globalement circulaire et une paroi latérale cylindrique 157 qui définissent un espace interne.

La bague de blocage 150 comporte également un épaulement 160 globalement circulaire ménagé dans la paroi latérale cylindrique 157 et définissant une arête vive 161 elle-même globalement circulaire.

L'épaulement 160 défini ainsi une première portion latérale interne 158 entre l'épaulement 160 et la base 156 et une deuxième portion latérale interne 159 entre l'épaulement 160 une extrémité libre de la bague de blocage 150.

L'épaulement 160, et plus précisément l'arête vive 161, et la deuxième portion latérale interne 159 forment ensemble des éléments complémentaires de référencement mécanique configurés pour positionner le palet semi-fini repéré 9 dans la deuxième position prédéterminée suivant les trois directions de translation Tx, Ty et Tz et suivant les trois directions de rotation Rx, Ry et Rz définies respectivement autour de ces directions de translation.

La bague de blocage 150 peut être utilisée en combinaison avec les palets semi-finis repérés 9 des figures 9 et 10, la zone chanfreinée respective 42 et 45 étant configurée pour venir en appui contre l'arête vive 161 et la tranche périphérique respective 17 pour s'emboîter dans la bague de blocage 150 contre la deuxième portion latérale interne 159.

Un autre élément de référencement mécanique complémentaire (non représenté) peut être ménagé dans la bague de blocage 150 pour recevoir le méplat 46 du palet semi-fini repéré 9 de la figure 10.

Les figures 13 à 16 illustrent le palet 1 selon différentes variantes de réalisation de la zone chanfreinée illustrée sur la figure 10. On parlera ci-après de chanfrein plutôt que de zone chanfreinée.

Sur les figures 13 et 14, le palet 9 présente une face avant ici du type progressif et le chanfrein 45 qu'il comporte présente respectivement un angle d'inclinaison α₁ d'environ 45° et un angle d'inclinaison α₂ d'environ 20°, par rapport à la tranche 17 du palet 9.

Ces angles d'inclinaison α₁ et α₂ distincts du chanfrein 45 sont déterminés de sorte à augmenter le contact entre le palet 9 et le deuxième dispositif de maintien en fonction d'au moins une contrainte prédéterminée.

Sur les figures 13 et 14 sont illustrés des périmètres de contact 70 entre le palet 9 et le deuxième dispositif de maintien.

Ces périmètres de contact 70 sont de longueurs distinctes le long du chanfrein 45 ; et sont représentatifs de longueurs de secteurs angulaires notés θ₁ et θ₂, passant par le centre optique ou le point de référence de prisme ou encore le centre géométrique P de la lentille, secteurs auxquels il faut soustraire la longueur du méplat 46 du palet 9.

Le périmètre de contact 70 entre l'épaulement d'un deuxième dispositif de maintien déterminé et le chanfrein 45 d'angle d'inclinaison α₁ est représentatif du secteur angulaire inférieur θ₁, qui est inférieur au secteur angulaire θ₂ qui représente le périmètre de contact 70 entre l'épaulement de ce deuxième dispositif de maintien déterminé et le chanfrein 45 d'angle d'inclinaison α₂.

En d'autres termes, le pourcentage de contact entre le palet illustré sur la figure 13 et le deuxième dispositif de maintien déterminé est moindre que le pourcentage de contact entre le palet illustré sur la figure 14 et ce deuxième dispositif de maintien déterminé.

Par conséquent, le palet illustré sur la figure 14 est plus stable dans le deuxième dispositif de maintien déterminé que le palet illustré sur la figure 13 dans ce même deuxième dispositif de maintien.

Sur les figures 15 et 16, le palet 9 présente une face avant ici du type régressif et le chanfrein 45 qu'il comporte présente respectivement un angle d'inclinaison α₁ d'environ 45° et un angle d'inclinaison α₃ d'environ 30°, par rapport à la tranche 17 du palet 9.

Ces angles d'inclinaison α₁ et α₃ distincts du chanfrein 45 sont eux aussi déterminés de sorte à augmenter le contact entre le palet 9 et le deuxième dispositif de maintien en fonction d'au moins une contrainte prédéterminée.

Sur les figures 15 et 16 sont illustrés également des périmètres de contact 70 entre le palet 9 et le deuxième dispositif de maintien, avec ces périmètres 70 qui ont ici une même longueur sensiblement égale à la longueur du chanfrein 45.

Sur les figures 15 et 16 sont en outre illustrés des rayons Rv représentatifs du rayon d'une zone optiquement utile souhaitée de la lentille ophtalmique et des rayons Rr₁ et Rr₂ représentatifs du rayon minimum d'une zone optiquement utile obtenue sur le palet 9 avec le chanfrein 45 ménagé sur ce dernier, avec ces rayons qui passent par le centre optique ou le point de référence de prisme ou encore le centre géométrique P de la lentille.

Cette zone optiquement utile ne doit pas comporter le chanfrein 45.

Le rayon Rr₁ obtenu avec un chanfrein 45 d'angle d'inclinaison α₁ est inférieur au rayon Rr₂ obtenu avec un chanfrein 45 d'angle d'inclinaison α₃.

En d'autres termes, le diamètre de lentille ophtalmique pouvant être obtenu avec un chanfrein 45 d'angle d'inclinaison α₃ est plus grand le diamètre de lentille ophtalmique pouvant être obtenu avec un chanfrein 45 d'angle d'inclinaison α₁.

Par conséquent, la lentille qui peut être obtenue à partir du palet illustré sur la figure 16 est plus ouverte que la lentille pouvant être obtenue avec le palet illustré sur la figure 15.

L'ouverture de la lentille ophtalmique est représentative de la taille de la zone optiquement utile.

Les deux contraintes présentées ci-dessus, à savoir la stabilité du palet dans un deuxième dispositif de maintien déterminé et l'ouverture de la lentille, peuvent être pris isolément ou en combinaison pour la détermination de l'angle d'inclinaison du chanfrein ménagé sur le palet.

On notera que dans les exemples présentés ci-dessus ont été pris des palets ayant des surfaces progressive et régressive, mais il pourrait aussi s'agir d'un palet ayant une surface torique.

Plus généralement, la détermination de l'angle d'inclinaison du chanfrein ménagé sur le palet est avantageuse dès lors que le palet présente une surface qui n'est pas une surface de révolution.

Cette détermination de l'angle d'inclinaison est réalisée préalablement aux étapes 73 à 81 d'usinage de la face supérieure et des éléments de référencements mécaniques sur le palet.

Cette détermination de l'angle d'inclinaison est par exemple mise en oeuvre lors de la définition de la géométrie de la lentille et de la géométrie des éléments de référencements mécaniques sur le palet en fonction d'un deuxième dispositif de maintien déterminé.

Cette détermination de l'angle d'inclinaison est par exemple réalisée par calcul itératif, en calculant le périmètre de contact entre le chanfrein et l'épaulement du deuxième dispositif de maintien déterminé jusqu'à obtenir un angle d'inclinaison qui permette de fournir un pourcentage de contact déterminé, par exemple supérieur à environ 55% du périmètre de contact entre le chanfrein et l'épaulement ; dans le but de satisfaire à la contrainte de stabilité.

En variante ou en complément, cette détermination de l'angle d'inclinaison est par exemple réalisée par calcul itératif, en calculant le rayon résultant du palet chanfreiné jusqu'à obtenir un angle d'inclinaison qui permette de fournir un rayon résultant au moins égal voire supérieur d'environ 1 mm à un rayon de lentille déterminé, par exemple supérieur à environ 55% du périmètre de contact entre le chanfrein et l'épaulement ; dans le but de satisfaire à la contrainte d'ouverture.

Dans une variante non illustrée, la pince d'usinage de la figure 8 n'est pas pourvue d'une protubérance cylindrique ménagé sur une paroi latérale cylindrique mais de trois protubérances en saillie de cette paroi latérale cylindrique, lesquelles sont configurées pour venir se loger dans les trois échancrures individuelles du palet semi-fini repéré 9 de la figure 11.

Dans des variantes non illustrées :
- le palet est pourvu de plusieurs élément de référencement mécanique, dont au moins une zone chanfreinée, et au moins une zone rainurée et/ou une pluralité d'échancrures individuelles ;
- la première face du palet à être usinée n'est pas la face avant mais plutôt la face arrière, avec la face avant qui est donc usinée ensuite ; plus généralement, on peut parler de première face et de deuxième face indépendamment de la position avant ou arrière et de la forme complexe, simple, concave ou convexe ;
- les faces supérieure et inférieure du palet brut ne sont pas sensiblement droites et parallèles entre elles, mais elles sont plutôt droites mais non parallèles, ou l'une est concave et l'autre est convexe, ou les deux sont concaves ou encore les deux sont convexes, voire ces faces ainsi que la tranche ont une forme sensiblement plane en patatoïde ;
- le procédé peut comporter une étape de filmer la face inférieure du palet brut entre les étapes 70 et 71 ; il s'agit de l'application sur cette face inférieure d'un film plastique permettant de protéger cette dernière ;
- le premier dispositif de maintien n'est pas formé par une pince à vide ni par une pince de serrage mais plutôt par une pince traditionnelle de machine d'usinage dans laquelle est serrée une molette pourvue généralement d'une pré-molette ;
- le deuxième dispositif de maintien n'est pas formé par une pince d'usinage ni par une bague de blocage mais plutôt par une broche d'usinage ou un robot ;
- le premier et/ou le deuxième dispositif de maintien présente une cavité débouchant de part et d'autre de sa base, cavité dans laquelle est coulée un liant formé par exemple par du métal fusible ou une cire ;
- la zone chanfreinée ou rainurée n'est pas continue mais seulement ménagée sur une portion du contour, voire sur plusieurs portions du contour ;
- les trois échancrures individuelles du palet semi-fini repéré de la figure 11 sont remplacées par des trous taraudés débouchant dans les faces supérieure et inférieure du palet, hors de la zone optiquement utile ;
- le méplat du palet semi-fini repéré de la figure 10 est remplacé simplement par un cran ou une marque faite par gravure ;
- l'élément de référencement mécanique est une rainure ou une protubérance ménagée sur la tranche périphérique du palet et le palet repéré est démonté du premier dispositif de maintien avant l'usinage de la face supérieure pour obtenir la première surface optique ;
- la zone chanfreinée ou rainurée est de dimensions variables, ce qui permet de prendre en compte en outre un prisme d'allégement avant même l'usinage et pour l'usinage de la face inférieure, lequel prisme d'allégement n'a donc pas besoin d'être pris en compte spécifiquement dans un bloqueur ou dans une machine d'usinage ;
- les éléments de référencement mécanique et éléments complémentaires de référencement mécanique sont dimensionnés spécifiquement en fonction de la lentille, ou en fonction du type de lentille, ou au contraire les dimensions sont déterminées quelle que soit la lentille ;
- le deuxième dispositif de maintien est pourvu de deux systèmes distincts, à savoir un premier système de positionnement et de maintien du palet semi-fini repéré et un second système de blocage de ce palet ; et /ou
- les marquages permanents ou temporaires, réalisés par exemple par gravure, sont faits sur la face avant de la lentille plutôt que sur sa face arrière.

On rappelle plus généralement que l'invention ne se limite pas aux exemples décrits et représentés mais comprend tous les modes de réalisation couverts par les revendications.

## Revendications

1. Procédé de fabrication par usinage d'une lentille ophtalmique (1) présentant une première face (2) et une deuxième face (3) opposée à ladite première face (2), ladite première face (2) étant pourvue d'une première surface optique (4) et ladite deuxième face (3) étant pourvue d'une deuxième surface optique (5), avec lesdites première et deuxième surfaces optiques (4, 5) qui définissent une zone optiquement utile (6) de ladite lentille ophtalmique (1), ledit procédé comportant les étapes de :
- fournir (70) un palet (10) ayant une face supérieure (12), une face inférieure (13) opposée à ladite face supérieure (12) et une tranche périphérique (17) raccordant lesdites faces supérieure (12) et inférieure (13) ;
- fournir (71) un premier dispositif de maintien (30 ; 130) présentant un premier référentiel d'usinage (18) défini par trois directions de translation correspondant à trois axes d'un repère orthonormal basique et par trois directions de rotation définies respectivement autour des trois dites directions de translation, avec deux des trois dites directions de translation qui se trouvent dans un même premier plan et l'autre des trois dites directions de translation qui se trouve dans un deuxième plan ;
ledit procédé étant **caractérisé en ce qu'**il comporte les étapes de :
- monter (72) ledit palet (10) sur ledit premier dispositif de maintien (30 ; 130) dans une première position où ladite face inférieure (13) dudit palet (10) est en regard dudit premier dispositif de maintien (30 ; 130), lequel est configuré pour maintenir ledit palet (10) par sa face inférieure (3) ou par sa tranche périphérique (17) ;
- usiner (73 ; 74 ; 77 ; 78 ; 81), dans ladite première position dans ledit premier référentiel d'usinage (18), ladite face supérieure (12) pour obtenir ladite première surface optique (4) et ainsi former un palet semi-fini (8) ;
- usiner (73 ; 75 ; 76 ; 79 ; 80) dans un deuxième référentiel d'usinage (19) défini de la même manière que ledit premier référentiel d'usinage (18), au moins un élément de référencement mécanique (42 ; 45) sur au moins l'une quelconque desdites faces supérieure (12) et inférieure (13) et de ladite tranche périphérique (17), avec ledit deuxième référentiel d'usinage (19) qui est prédéterminé et connu par rapport audit premier référentiel d'usinage (18), et avec ladite étape (73 ; 75 ; 76 ; 79 ; 80) d'usiner qui est configurée pour que ledit au moins un élément de référencement mécanique (42 ; 45) soit situé en dehors de ladite zone optiquement utile (6), pour former ainsi un palet semi-fini repéré (9) ; et
- fournir (84) un deuxième dispositif de maintien (150) comportant au moins un élément complémentaire de référencement mécanique (159, 161), lequel est configuré pour coopérer avec ledit au moins un élément de référencement mécanique (42 ; 45) dudit palet semi-fini repéré (9) pour que ce dernier soit positionné et maintenu sur ledit deuxième dispositif de maintien (150) dans une deuxième position qui est prédéterminée au moins suivant les trois dites directions de translation et suivant les deux dites directions de rotation définies respectivement autour des deux dites directions de translation qui se trouvent dans ledit premier plan ;
**caractérisé en ce que** ledit au moins un élément de référencement mécanique est formé par usinage d'au moins une zone chanfreinée (42 ; 45) ménagée au moins sur ladite tranche périphérique (17) et sur l'une quelconque desdites faces supérieure (12) et inférieure (13), hors de ladite zone optiquement utile (6) ; et **en ce que** ledit au moins un élément complémentaire de référencement mécanique est formé par au moins un épaulement (160, 161) ménagé sur ledit deuxième dispositif de maintien (150) et configuré pour recevoir en appui ladite au moins une zone chanfreinée.

2. Procédé selon la revendication 1, **caractérisé en ce que** ledit premier référentiel d'usinage (18) et ledit deuxième référentiel d'usinage (19) sont confondus.

3. Procédé selon l'une des revendications 1 et 2, **caractérisé en ce que** lesdites étapes (73 ; 74 ; 77) d'usiner ladite face supérieure (12) et ledit au moins un élément de référencement mécanique (42 ; 45) sont successives ou confondues.

4. Procédé selon la revendication 1, **caractérisé en ce que** ledit premier référentiel d'usinage (18) et ledit deuxième référentiel d'usinage (19) sont distincts, avec ledit deuxième référentiel d'usinage qui présente un décalage connu par rapport audit premier référentiel d'usinage.

5. Procédé selon l'une quelconque des revendications 1 à 4, **caractérisé en ce qu'**au moins un autre dit élément de référencement mécanique est formé par usinage d'au moins une zone rainurée (40) ménagée sur ladite tranche périphérique (17) ou sur l'une quelconque desdites faces supérieure (12) et inférieure (13), hors de ladite zone optiquement utile (6) ; et au moins un autre dit élément complémentaire de référencement mécanique est formé par au moins une protubérance (53) ménagée sur ledit deuxième dispositif de maintien et configurée pour être reçue en appui dans ladite au moins une zone rainurée (40).

6. Procédé selon l'une quelconque des revendications 1 à 5, **caractérisé en ce que** ladite au moins une zone chanfreinée (45) est au moins partiellement continue et de dimensions constantes, respectivement de largeur ou de profondeur, et ledit au moins un élément de référencement mécanique est en outre formé par usinage d'une zone de blocage (46) sur ladite tranche périphérique (17), laquelle zone de blocage (46) est configurée pour positionner ledit palet semi-fini repéré (9) suivant ladite direction de rotation définie autour de ladite direction de translation qui se trouve dans ledit deuxième plan.

7. Procédé selon l'une quelconque des revendications 1 à 6, **caractérisé en ce que** ladite au moins une zone chanfreinée (42) est au moins partiellement continue et de dimensions variables, respectivement de largeur ou de profondeur.

8. Procédé selon l'une quelconque des revendications 1 à 7, **caractérisé en ce qu'**au moins un autre dit élément de référencement mécanique est formé par usinage d'une pluralité d'échancrures individuelles (47) ménagées sur ladite tranche périphérique (17) et/ou ou sur l'une quelconque desdites faces supérieure (12) et inférieure (13), hors de ladite zone optiquement utile (6) ; et au moins un autre dit élément complémentaire de référencement mécanique est formé par une pluralité de protubérances ménagées sur ledit deuxième dispositif de maintien et configurées pour recevoir en appui ladite pluralité d'échancrures individuelles.

9. Procédé selon l'une quelconque des revendications 1 à 8, **caractérisé en ce qu'**il comporte en outre les étapes de :
- monter (85) ledit palet semi-fini repéré (9) sur ledit deuxième dispositif de maintien (150) dans ladite deuxième position prédéterminée, lequel est configuré pour maintenir ledit palet semi-fini repéré (9) par sa face supérieure (12) ou par sa tranche périphérique (17) ; et
- usiner (86) ladite face inférieure (13) dudit palet semi-fini repéré (9) pour obtenir ladite deuxième surface optique (5) et ainsi former ladite lentille ophtalmique (1).

10. Procédé selon l'une quelconque des revendications 1 à 9, **caractérisé en ce que** ladite au moins une zone chanfreinée (42, 45) dudit palet (9) présente un angle d'inclinaison (α₁, α₂, α₃) par rapport à ladite tranche (7) dudit palet (9), lequel angle d'inclinaison est déterminé de sorte à augmenter le contact entre ledit palet (9) et ledit deuxième dispositif de maintien (150) en fonction d'au moins une contrainte prédéterminée.

11. Procédé selon la revendication 10, **caractérisé en ce que** ledit angle d'inclinaison (α₁, α₂, α₃) de ladite au moins une zone chanfreinée (42, 45) est déterminé en fonction d'une caractéristique représentative d'un périmètre de contact entre ladite au moins une zone chanfreinée (42, 45) dudit palet (9) et ledit élément complémentaire de référencement mécanique (159, 161) dudit deuxième dispositif de maintien (150) pour assurer la stabilité dudit palet (9) dans ledit deuxième dispositif de maintien (150).

12. Procédé selon l'une des revendications 10 et 11, **caractérisé en ce que** ledit angle d'inclinaison (α₁, α₂, α₃) de ladite au moins une zone chanfreinée (42, 45) est déterminé en fonction d'une caractéristique représentative d'une zone optiquement utile (6) de ladite lentille ophtalmique pour assurer une ouverture prédéterminée de ladite lentille ophtalmique.

## Patentansprüche

1. Verfahren zur maschinellen Herstellung einer Kontaktlinse (1), die eine erste Seite (2) und eine zweite, der ersten Seite (2) gegenüberliegende Seite (3) aufweist, wobei die erste Seite (2) mit einer ersten optischen Oberfläche (4) versehen ist, und die zweite Seite (3) mit einer zweiten optischen Oberfläche (5) versehen ist, wobei die erste und die zweite optische Oberfläche (4, 5) eine optisch nützliche Zone (6) der Kontaktlinse (1) definieren, wobei das Verfahren die folgenden Schritte umfasst:
- Bereitstellen (70) einer Scheibe (10) mit einer Oberseite (12), einer Unterseite (13), die der Oberseite (12) gegenüberliegt, und einen Umfangsabschnitt (17), der die Ober-(12) und Unterseite (13) verbindet;
- Bereitstellen (71) einer ersten Haltevorrichtung (30; 130), die ein erstes Bearbeitungsbezugssystem (18) aufweist, das durch drei Translationsrichtungen, die den drei Achsen eines orthonormierten Grundkoordinatensystems entsprechen, und durch drei Rotationsrichtungen definiert ist, die jeweils um die drei Translationsrichtungen definiert sind, wobei sich zwei der drei Translationsrichtungen in einer selben Ebene befinden, und sich die andere der drei Translationsrichtungen in einer zweiten Ebene befindet;
wobei das Verfahren **dadurch gekennzeichnet ist, dass** es die folgenden Schritte umfasst:
- Montieren (72) der Scheibe (10) auf der ersten Haltevorrichtung (30; 130) in einer ersten Position, in der die Unterseite (13) der Scheibe (10) der ersten Haltevorrichtung (30; 130) gegenüberliegt, die eingerichtet ist, um die Scheibe (10) mit ihrer Unterseite (3) oder mit ihrem Umfangsabschnitt (17) zu halten;
- Bearbeiten (73; 74; 77; 78; 81) der Oberseite (12) in der ersten Position in dem ersten Bearbeitungsbezugssystem (18), um die erste optische Oberfläche (4) zu erhalten und so eine halbfertige Scheibe (8) zu bilden;
- Bearbeiten (73; 75; 76; 79; 80) in einem zweiten Bearbeitungsbezugssystem (19), das auf dieselbe Weise wie das erste Bearbeitungsbezugssystem (18) definiert ist, mindestens eines mechanischen Markierungselements (42; 45) auf mindestens einer der Ober- (12) und Unterseiten (13) und dem Umfangsabschnitt (17), wobei das zweite Bearbeitungsbezugssystem (19) vorbestimmt und gegenüber dem ersten Bearbeitungsbezugssystem (18) bekannt ist, und wobei der Bearbeitungsschritt (73; 75; 76; 79; 80) eingerichtet ist, dass mindestens ein mechanisches Markierungselement (42; 45) außerhalb der optisch nützlichen Zone (6) angeordnet ist, um so eine markierte halbfertige Scheibe (9) zu bilden; und
- Bereitstellen (84) einer zweiten Haltevorrichtung (150), umfassend mindestens ein komplementäres mechanisches Markierungselement (159, 161), das eingerichtet ist, um mit dem mindestens einen mechanischen Markierungselement (42; 45) der markierten halbfertigen Scheibe (9) zusammenzuwirken, so dass diese letztgenannte auf der zweiten Haltevorrichtung (150) in einer zweiten Position positioniert und gehalten wird, die zumindest in den drei Translationsrichtungen und in den zwei Rotationsrichtungen, die um die zwei Translationsrichtungen, die sich in der ersten Ebene befinden, definiert sind, vorbestimmt ist;
**dadurch gekennzeichnet, dass** das mindestens eine mechanische Markierungselement durch Bearbeiten mindestens einer abgeschrägten Zone (42; 45) gebildet ist, die zumindest auf dem Umfangsabschnitt (17) und auf einer der Ober- (12) und Unterseiten (13) außerhalb der optisch nützlichen Zone (6) vorgesehen ist; und dass das mindestens eine komplementäre mechanische Markierungselement von mindestens einem Absatz (160; 161) gebildet ist, der auf der zweiten Haltevorrichtung (150) vorgesehen und eingerichtet ist, um die mindestens eine abgeschrägte Zone anliegend aufzunehmen.

2. Verfahren nach Anspruch 1, **dadurch gekennzeichnet, dass** das erste Bearbeitungsbezugssystem (18) und das zweite Bearbeitungsbezugssystem (19) zusammenfallen.

3. Verfahren nach einem der Ansprüche 1 und 2, **dadurch gekennzeichnet, dass** die Bearbeitungsschritte (73; 74; 77) der Oberseite (12) und das mindestens eine mechanische Markierungselement (42; 45) aufeinanderfolgen oder zusammenfallen.

4. Verfahren nach Anspruch 1, **dadurch gekennzeichnet, dass** das erste Bearbeitungsbezugssystem (18) und das zweite Bearbeitungsbezugssystem (19) unterschiedlich sind, wobei das zweite Bearbeitungsbezugssystem einen bekannten Versatz gegenüber dem ersten Bearbeitungsbezugssystem aufweist.

5. Verfahren nach einem der Ansprüche 1 bis 4, **dadurch gekennzeichnet, dass** mindestens ein weiteres mechanisches Markierungselement durch Bearbeitung mindestens einer geriffelten Zone (40) gebildet wird, die auf dem Umfangsabschnitt (17) oder auf einer der Ober- (12) und Unterseiten (13) außerhalb der optisch nützlichen Zone (6) vorgesehen ist; und mindestens ein weiteres komplementäres mechanisches Markierungselement durch mindestens eine Ausstülpung (53) gebildet wird, die auf der zweiten Haltevorrichtung vorgesehen und eingerichtet ist, um in der mindestens einen geriffelten Zone (40) anliegend aufgenommen zu werden.

6. Verfahren nach einem der Ansprüche 1 bis 5, **dadurch gekennzeichnet, dass** die mindestens eine abgeschrägte Zone (45) zumindest teilweise durchgehend ist und konstante Abmessungen in der Breite bzw. in der Tiefe aufweist, und dass das mindestens eine mechanische Markierungselement ferner durch Bearbeitung einer Feststellzone (46) auf dem Umfangsabschnitt (17) gebildet ist, wobei die Feststellzone (46) eingerichtet ist, um die markierte halbfertige Scheibe (9) in einer definierten Rotationsrichtung um die Translationsrichtung, die sich in der zweiten Ebene befindet, zu positionieren.

7. Verfahren nach einem der Ansprüche 1 bis 6, **dadurch gekennzeichnet, dass** die mindestens eine abgeschrägte Zone (42) zumindest teilweise durchgehend ist und variable Abmessungen in der Breite bzw. in der Tiefe aufweist.

8. Verfahren nach einem der Ansprüche 1 bis 7, **dadurch gekennzeichnet, dass** mindestens ein weiteres mechanisches Markierungselement durch Bearbeitung einer Vielzahl von einzelnen bogenförmigen Ausschnitten (47) gebildet wird, die auf dem Umfangsabschnitt (17) und/oder auf einer der Ober- (12) und Unterseiten (13) außerhalb der optisch nützlichen Zone (6) vorgesehen sind; und dass mindestens ein weiters komplementäres mechanisches Markierungselement von einer Vielzahl von Ausstülpungen gebildet ist, die auf der zweiten Haltevorrichtung vorgesehen und eingerichtet sind, um die Vielzahl von einzelnen bogenförmigen Ausschnitten anliegend aufzunehmen.

9. Verfahren nach einem der Ansprüche 1 bis 8, **dadurch gekennzeichnet, dass** es ferner die folgenden Schritte umfasst:
- Montieren (85) der markierten halbfertigen Scheibe (9) auf der zweiten Haltevorrichtung (150) in der zweiten vorbestimmten Position, die eingerichtet ist, um die markierte halbfertige Scheibe (9) mit ihrer Oberseite (12) oder mit ihrem Umfangsabschnitt (17) zu halten; und
- Bearbeiten (86) der Unterseite (13) der markierten halbfertigen Scheibe (9), um die zweite optische Oberfläche (5) zu erhalten und so die Kontaktlinse (1) zu bilden.

10. Verfahren nach einem der Ansprüche 1 bis 9, **dadurch gekennzeichnet, dass** die mindestens eine abgeschrägte Zone (42, 45) der Scheibe einen Neigungswinkel (α₁, α₂, α₃) in Bezug zum Abschnitt (7) der Scheibe (9) aufweist, wobei der Neigungswinkel derart bestimmt ist, dass der Kontakt zwischen der Scheibe (9) und der zweiten Haltevorrichtung (150) in Abhängigkeit von mindestens einer vorbestimmten Spannung erhöht wird.

11. Verfahren nach Anspruch 10, **dadurch gekennzeichnet, dass** der Neigungswinkel (α₁, α₂, α₃) der mindestens einen abgeschrägten Zone (42, 45) in Abhängigkeit von einem Merkmal bestimmt wird, das für einen Kontaktumfang zwischen der mindestens einen abgeschrägten Zone (42, 45) der Scheibe (9) und dem komplementären mechanischen Markierungselement (159, 161) der zweiten Haltevorrichtung (150) repräsentativ ist, um die Stabilität der Scheibe (9) in der zweiten Haltevorrichtung (150) zu gewährleisten.

12. Verfahren nach einem der Ansprüche 10 und 11, **dadurch gekennzeichnet, dass** der Neigungswinkel (α₁, α₂, α₃) der mindestens einen abgeschrägten Zone (42, 45) in Abhängigkeit von einem Merkmal bestimmt wird, das für eine optisch nützliche Zone (6) der Kontaktlinse repräsentativ ist, um eine vorbestimmte Öffnung der Kontaktlinse zu gewährleisten.

## Claims

1. Process for manufacturing by machining an ophthalmic lens (1) having a first face (2) and a second face (3) opposite said first face (2), said first face (2) being provided with a first optical area (4) and said second face (3) being provided with a second optical area (5), said first and second optical areas (4, 5) defining an optically useful zone (6) of said ophthalmic lens (1), said process comprising steps of:
- providing (70) a lens blank (10) having an upper face (12), and a lower face (13) opposite said upper face (12) and a peripheral edge face (17) joining said upper and lower faces (12, 13);
- providing (71) a first holding device (30; 130) having a first machining frame of reference (18) defined by three translational directions corresponding to three axes of a basic orthonormal coordinate system and by three rotational directions defined about said three translational directions, respectively, with two of said three translational directions being located in one and the same first plane and the other of said three translational directions being located in a second plane; said process being **characterized in that** it comprises steps of:
- mounting (72) said lens blank (10) on said first holding device (30; 130) in a first position in which said lower face (13) of said lens blank (10) is facing said first holding device (30; 130), which is configured to hold said lens blank (10) via its lower face (3) or via its peripheral edge face (17);
- machining (73; 74; 77; 78; 81), in said first position in said first machining frame of reference (18), said upper face (12) to obtain said first optical area (4) and thus form a semi-finished lens blank (8);
- machining (73; 75; 76; 79; 80), in a second machining frame of reference (19) defined in the same way as said first machining frame of reference (18), at least one mechanical referencing element (42; 45) in at least any one of said upper and lower faces (12, 13) and said peripheral edge face (17), said second machining frame of reference (19) being preset and known relative to said first machining frame of reference (18), and said machining step (73; 75; 76; 79; 80) being configured so that said at least one mechanical referencing element (42; 45) is located outside of said optically useful zone (6), so as thus to form a referenced semi-finished lens blank (9); and
- providing (84) a second holding device (150) comprising at least one complementary mechanical referencing element (159, 161), which is configured to interact with said at least one mechanical referencing element (42; 45) of said referenced semi-finished lens blank (9) so that the latter is positioned and held on said second holding device (150) in a second position that is preset at least in said three translational directions and in said two rotational directions defined about said two translational directions that are located in said first plane, respectively,
**characterized in that** said at least one mechanical referencing element is formed by machining at least one chamfered zone (42; 45) produced at least in said peripheral edge face (17) and in either one of said upper and lower faces (12, 13), outside of said optically useful zone (6), and **in that** said at least one complementary mechanical referencing element is formed by at least one shoulder (160, 161) produced in said second holding device (150) and configured to receive in abutment said at least one chamfered zone.

2. Process according to Claim 1, **characterized in that** said first machining frame of reference (18) and said second machining frame of reference (19) are coincident.

3. Process according to one of Claims 1 and 2, **characterized in that** said steps (73; 74; 77) of machining said upper face (12) and said at least one mechanical referencing element (42; 45) are successive or merged.

4. Process according to Claim 1, **characterized in that** said first machining frame of reference (18) and said second machining frame of reference (19) are separate, said second machining frame of reference having a known offset relative to said first machining frame of reference.

5. Process according to any one of Claims 1 to 4, **characterized in that** at least one other of said mechanical referencing elements is formed by machining at least one grooved zone (40) produced in said peripheral edge face (17) or in either one of said upper and lower faces (12, 13), outside of said optically useful zone (6); and at least one other of said complementary mechanical referencing elements is formed by at least one protuberance (53) produced in said second holding device and configured to be received in abutment in said at least one grooved zone (40).

6. Process according to any one of Claims 1 to 5, **characterized in that** said at least one chamfered zone (45) is at least partially continuous and of constant size, of constant width or depth, respectively, and said at least one mechanical referencing element is furthermore formed by machining a blocking zone (46) on said peripheral edge face (17), which blocking zone (46) is configured to position said referenced semi-finished lens blank (9) in said rotational direction defined about said translational direction that is located in said second plane.

7. Process according to any one of Claims 1 to 6, **characterized in that** said at least one chamfered zone (42) is at least partially continuous and of variable size, of variable width or depth, respectively.

8. Process according to any one of Claims 1 to 7, **characterized in that** at least one other of said mechanical referencing elements is formed by machining a plurality of individual indents (47) produced in said peripheral edge face (17) and/or in either one of said upper and lower faces (12, 13), outside of said optically useful zone (6); and at least one other of said complementary mechanical referencing elements is formed by a plurality of protuberances produced in said second holding device and configured to receive in abutment said plurality of individual indents.

9. Process according to any one of Claims 1 to 8, **characterized in that** it furthermore comprises steps of:
- mounting (85) said referenced semi-finished lens blank (9) on said second holding device (150) in said second preset position, said device (150) being configured to hold said referenced semi-finished lens blank (9) via its upper face (12) or via its peripheral edge face (17); and
- machining (86) said lower face (13) of said referenced semi-finished lens blank (9) to obtain said second optical area (5) and thus form said ophthalmic lens (1).

10. Process according to any one of Claims 1 to 9, **characterized in that** said at least one chamfered zone (42, 45) of said lens blank (9) has an angle of inclination (α₁, α₂, α₃) relative to said edge face (7) of said lens blank (9), which angle of inclination is set so as to increase contact between said lens blank (9) and said second holding device (150) depending on at least one preset constraint.

11. Process according to Claim 10, **characterized in that** said angle of inclination (α₁, α₂, α₃) of said at least one chamfered zone (42, 45) is set depending on a characteristic representative of a perimeter of contact between said at least one chamfered zone (42, 45) of said lens blank (9) and said complementary mechanical referencing element (159, 161) of said second holding device (150) in order to ensure the stability of said lens blank (9) in said second holding device (150).

12. Process according to one of Claims 10 and 11, **characterized in that** said angle of inclination (α₁, α₂, α₃) of said at least one chamfered zone (42, 45) is set depending on a characteristic representative of an optically useful zone (6) of said ophthalmic lens in order to ensure a preset aperture for said ophthalmic lens.
